(19) Europäisches Patentamt

European Patent Office

Office européen des brevets

(11) EP 4 495 877 A1

(12) **EUROPEAN PATENT APPLICATION**

(43) Date of publication:
22.01.2025 Bulletin 2025/04

(21) Application number: 23186131.1

(22) Date of filing: 18.07.2023

(51) International Patent Classification (IPC):
**G06T 7/00** (2017.01)

(52) Cooperative Patent Classification (CPC):
**G06T 7/0002;** G06T 2207/10112; G06T 2207/10116;
G06T 2207/10124; G06T 2207/20081;
G06T 2207/20084; G06T 2207/30168

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Healthineers AG**
**91301 Forchheim (DE)**

(72) Inventors:
• **Biniazan, Ramyar**
**90402 Nürnberg (DE)**
• **Fieselmann, Andreas**
**91052 Erlangen (DE)**
• **Herbst, Magdalena**
**91056 Erlangen (DE)**

(74) Representative: **Siemens Healthineers**
**Patent Attorneys**
**Postfach 22 16 34**
**80506 München (DE)**

(54) **COMPUTER-IMPLEMENTED METHOD FOR DETERMINING A RELIABILITY SCORE**

(57) The invention relates to a computer-implemented method (10) for determining a reliability score for determining a measured value from a medical X-ray image, comprising:
- Providing (9) an acquired X-ray image of a region of interest of an object under investigation,
- applying (11) a first function ($T_i$) to the X-ray image and thereby determining (12) anatomical characteristics in the region of interest,
- applying (13) a trained second function ($R_i$) to the X-ray image and thereby determining (14) a reliability score (RS) of the output of the first function, wherein the trained second function is linked to the first function.

FIG 1

EP 4 495 877 A1

**Description**

The invention relates to X-ray imaging, especially the identification of anatomical landmarks in X-ray images, which can provide important information for diagnosis and treatment planning. However, landmark detection in X-ray images can be challenging due to the complex anatomy, variation in patient positioning, and variability in image quality. Therefore, there is a need for a reliable and efficient system for landmark detection or measurements based on detected landmarks in X-ray images.

Measurements of length and angles are frequently made in musculoskeletal (MSK) X-ray applications in order to assess orthopedic diseases. As an example, the distance between the anterior and posterior acetabular rims is measured. The accuracy of those measurement depends on the quality of the acquired X-ray image. Factors that can degrade image quality are, for example, non-optimal patient positioning which can lead to an overlap of structures in the projection image, a low contrast-to-noise ratio in the X-ray image which makes the key features or anatomical characteristics less visible for the measurement, etc. For example, due to suboptimal positioning of the region of interest, anatomical landmarks could be (partially hidden) behind other structures.

In known clinical workflows, the radiographer, who acquires e.g. an MSK X-ray image, has the responsibility to check the X-ray image quality in terms of the image's usefulness in evaluating the clinical indication by the physician (e.g. radiologist, orthopedist, etc.).

However, depending on the experience or skill level of the radiographer and/or available time, the accuracy of this image quality assessment may vary. Thus, a less subjective assessment of the image quality, especially in terms of the image's usefulness for the MSK measurement and/or classification task, is required.

Up to now, the image quality, especially in terms of the image's usefulness for the MSK measurement and/or classification task, is assessed visually by the radiographer after the X-ray image has been acquired.

The publication EP 3 566 651 A1 discloses a method for determining result values on the basis of a skeletal medical image recording, comprising the steps:

- providing a skeletal medical image recording,
- automatic determination of reference points in the image recording,
- calculating an orthopedic result value based at least on a distance between two reference points and / or on an angle defined by reference points.

The technical problem which is the basis for this invention is that the image quality, especially with respect to the patient positioning, depends on the expertise of the radiographer acquiring the exam or rather the X-ray image.

It is an object of the invention to provide a method which evaluates the patient positioning after acquiring the X-ray image.

In the following the solution according to the invention is described with respect to the claimed providing systems as well as with respect to the claimed methods. Features, advantages or alternative embodiments herein can be assigned to the other claimed objects and vice versa. In other words, claims for the providing systems can be improved with features described or claimed in the context of the methods. In this case, the functional features of the method are embodied by objective units of the providing system.

Furthermore, in the following the solution according to the invention is described with respect to methods and systems for determining a reliability score as well as with respect to methods and systems for providing the second trained function. Features, advantages or alternative embodiments herein can be assigned to the other claimed objects and vice versa. In other words, claims for methods and systems for providing the second trained function can be improved with features described or claimed in context of the methods and systems for determining a reliability score, and vice versa.

In particular, the trained second function of the methods and systems for determining a reliability score can be adapted by the methods and systems for providing the second trained function. Furthermore, the input data can comprise advantageous features and embodiments of the training input data, and vice versa. Furthermore, the output data can comprise advantageous features and embodiments of the output training data, and vice versa.

Independent of the grammatical term usage, individuals with male, female or other gender identities are included within the term.

The invention relates to a computer-implemented method for determining a reliability score for determining a measured value from a medical X-ray image, comprising:

- providing an acquired X-ray image of a region of interest of an object under investigation,
- applying a first function $T_i$ to the X-ray image and thereby determining anatomical characteristics in the region of interest,
- applying a trained second function $R_i$ to the X-ray image and thereby determining a reliability score (RS) of the output of the first function, wherein the second function is linked to the first function.

The acquired X-ray image of a region of interest of an object under investigation is provided. Preferably, the X-ray image is a radiographic image. The X-ray image can be a two-dimensional X-ray image. In an alternative, the X-ray image can be a three-dimensional image, e.g. a tomosynthesis image.

The step of applying a first function can be carried out before, after or during carrying out the step of applying a trained second function. The steps can be carried out in a sequential order or in parallel. An X-ray image comprising a region-of-interest (ROI) is acquired. The first function $T_i$ is applied to the acquired X-ray image and thereby anatomical characteristics in the region of interest are determined. A trained second function $R_i$ is applied to the acquired X-ray image and thereby a reliability score (RS) of the output of the first function is determined, wherein the second function is linked to the first function.. The first function can be taken into account during training of the second function wherein the trained second function is linked to the first function.

The anatomical characteristics can comprise a measured value corresponding to e.g. a distance between two or more landmarks. Based on the anatomical characteristics a measured value con be determined or deduced. The anatomical characteristics can serve as a basis for measuring a distance within the region-of-interest.

In general, a trained function mimics cognitive functions that humans associate with other human minds. In particular, by training based on training data the trained function is able to adapt to new circumstances and to detect and extrapolate patterns.

In general, parameters of a trained function can be adapted by means of training. In particular, supervised training, semi-supervised training, unsupervised training, reinforcement learning and/or active learning can be used. Furthermore, representation learning (an alternative term is "feature learning") can be used. In particular, the parameters of the trained functions can be adapted iteratively by several steps of training.

In particular, a trained function can comprise a neural network, a support vector machine, a decision tree and/or a Bayesian network, and/or the trained function can be based on k-means clustering, Q-learning, genetic algorithms and/or association rules. In particular, a neural network can be a deep neural network, a convolutional neural network or a convolutional deep neural network. Furthermore, a neural network can be an adversarial network, a deep adversarial network and/or a generative adversarial network.

According to an aspect of the invention, the first function comprises a classification function and/or a landmark detection function. The first function can be based on a classification model and/or a landmark detection model. According to an aspect of the invention, the trained second function comprises a classification function. The second function can be based on a classification model.

According to an aspect of the invention, the region of interest comprises at least a subregion of the musculoskeletal system and/or a distance based on the anatomical characteristics is determined.

The invention further relates to a computer-implemented method for providing a trained second function, comprising:

- Receiving first input training data, wherein the first input training data comprises a first X-ray image ($I_{sim,ref}$) with a high contrast-to-noise-ratio and a well-positioned region of interest;
- Receiving second input training data, wherein the second input training data comprises a second X-ray image ($I_{sim}$) with a different contrast-to-noise-ratio compared to the first X-ray image and/or a differently positioned region of interest compared to the first X-ray image,
- Receiving output training data, wherein the output training data is related to the first input training data and the second input training data, wherein the first X-ray image is processed by a first function and a first model output ($O_{sim,ref}$) is generated, wherein the second X-ray image is processed by the first function and a second model output ($O_{sim}$) is generated, and wherein a reliability score (RS) as output training data is determined based on the first model output and the second model output,
- Training the second function based on the second input training data and the output training data,
- Providing the trained second function.

According to an aspect of the invention, the first input training data and the second input training data are generated by a digitally reconstructed radiograph function based on CT volume data.

According to an aspect of the invention, the positioning of the region of interest is determined by a parameter describing the relative orientation of the region of interest to an X-ray source and an X-ray detector and/or an anatomy modification parameter which is used as input to the digitally reconstructed radiograph function.

According to an aspect of the invention, the reliability score (RS) is a binary score. As alternative, the reliability score can describe a range of low reliability to high reliability, e.g. by using values between 0 and 1.

The invention further relates to a method for determining a reliability score for determining a measured value from a medical X-ray image, wherein the trained second function is provided by the method for providing a trained second function.

The invention further relates to a providing system, comprising:

- A first interface, configured for receiving input data, wherein the input data comprises an acquired X-ray image of a region of interest of an object under investigation,
- A second interface, configured for providing output data, wherein the output data comprises the reliability score;
- A computation unit, configured for applying a trained second function to the input data, wherein output data is generated, wherein a first function ($T_i$) is applied to the X-ray image and thereby a measured value corresponding to anatomical characteristics in the region of interest is determined, and a trained second function ($R_i$) is applied to the X-ray image and thereby a reliability score (RS) of the output of the first function is determined, wherein the trained second function is linked to the first function.

The invention further relates to a computer program product comprising instructions which, when the program is executed by a providing system, cause the providing system to carry out the method for determining a reliability score for determining a measured value from a medical X-ray image.

The invention further relates to a computer-readable medium comprising instructions which, when executed by a providing system, cause the providing system to carry out the method for determining a reliability score for determining a measured value from a medical X-ray image.

The invention further relates to a training system, comprising:

- A first training interface, configured for receiving first input training data and second input training data, wherein the first input training data comprises a first X-ray image ($I_{sim,ref}$) with a high contrast-to-noise-ratio and a well-positioned region of interest, and wherein the second input training data comprises a second X-ray image ($I_{sim}$) with a different contrast-to-noise-ratio compared to the first X-ray image and a differently positioned region of interest compared to the first X-ray image,
- A second training interface, configured for receiving output training data, wherein the output training data is related to the first input training data and the second input training data, wherein the first X-ray image is processed by a first function and a first model output ($O_{sim,ref}$) is generated, wherein the second X-ray image is processed by the first function and a second model output ($O_{sim}$) is generated, and wherein a reliability score (RS) is determined based on the first model output and the second model output,
- A training computation unit, configured for training a second function based on the second input training data and the output training data,
- A third training interface, configured for providing the trained second function.

The invention further relates to a computer program product comprising instructions which, when the program is executed by a training system, cause the training system to carry out the method for providing a trained second function.

The invention further relates to a computer-readable medium comprising instructions which, when executed by a training system, cause the training system to carry out the method for providing a trained second function.

The invention further relates to a medical X-ray system comprising the providing system according to the invention.

The inventors propose a method to assess if the acquired image is reliable for the MSK measurement/classification task that was the intention of the exam. In a more general sense, the invention can also assess the reliability of a model output for other (non-MSK) kind of applications.

The invention provides several advantages and differences to known methods.

Compared to a visual assessment by the radiographer (current standard of care) our invention provides an automated assessment that is less subjective and more time efficient.

The invention is very **generic** and has no dependency on the exact type of model $T_i$. This invention can be applied to many different tasks. As only prerequisite, a DRR pipeline and CT data pool must be available. The annotation of the image (RS) score is determined automatically from the comparison of the predictions $O_{sim}$ and $O_{sim,ref}$.

The invention is **not limited to MSK** measurement / classification task but could also be used the reliability assessment for detecting lesions, for example.

Examples of embodiments of the invention are explained in more detail below by means of drawings.

FIG 1 a schematic representation of the method for determining a reliability score for determining a measured value from a medical X-ray image according to the invention;
FIG 2 a schematic representation of the method for providing a trained second function according to the invention;
FIG 3 a schematic representation of the medical system according to the invention;
FIG 4 a schematic representation of an artificial neural network according to the invention; and
FIG 5 a convolutional neural network according to the invention.

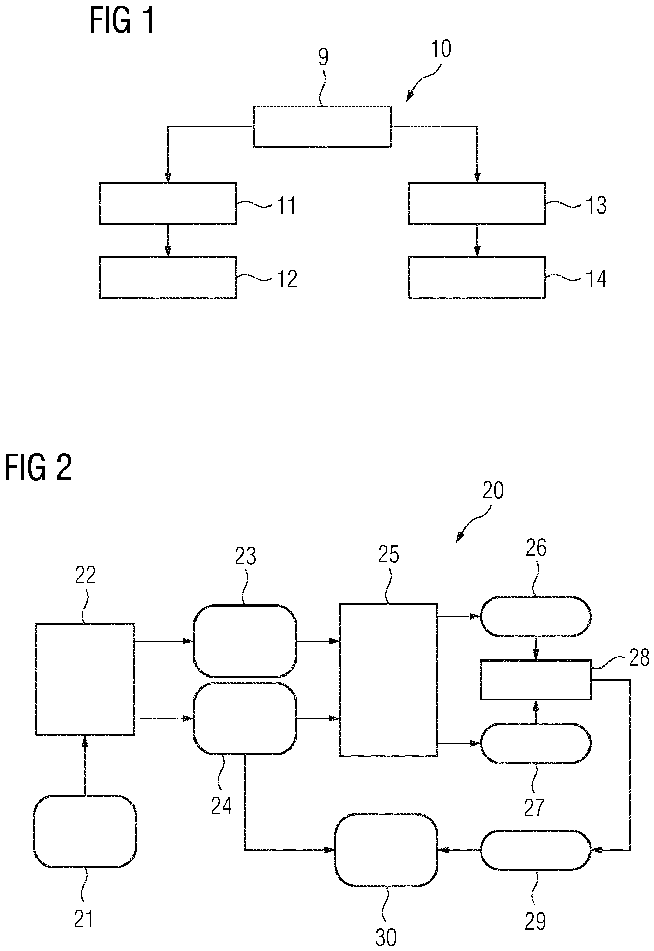

Fig. 1 shows the computer-implemented method 10 for determining a reliability score for determining a measured value from a medical X-ray image, comprising:

- Providing 9 an acquired X-ray image of a region of interest of an object under investigation,
- applying 11 a first function (T$_i$) to the X-ray image and thereby determining (12) anatomical characteristics in the region of interest,
- applying 13 a trained second function (R$_i$) to the X-ray image and thereby determining (14) a reliability score (RS) of the output of the first function, wherein the trained second function is linked to the first function.

FIG 1 shows an overview how the method is applied and how the inference phase looks like.

First, an acquired image I is processed by a specific task-dependent model T$_i$. The model T$_i$ is a first function. The index i refers to the specific MSK measurement / classification task. The model T$_i$. can be of any kind. E. g. it can be a landmark detection task and the landmarks could be used for measuring distances.

Second, the same image I is processed by a model R$_i$ which is a classification task (and could be implemented by a Dense-Net-architecture-like CNN, see *Huang et al. (2016), Densely Connected Convolutional Networks, https://arxiv.org/abs/1608.06993,* for example). The model R$_i$ is the trained second function. The model R$_i$ estimates the reliability that model T$_i$ gives an acceptable output (within acceptable range of deviation from ground truth) for the specific MSK measurement / classification task.

The trained second function R$_i$ is closely linked to the model or first function T$_i$ and can only assess the reliability of images processed with T$_i$.

The output from the trained second function R$_i$ is denoted as reliability score (RS). The RS can be used in several ways:

- The RS can be shown to the operator of the imaging device after image acquisition to give real-time feedback to the user if the acquired image is considered to the usable for the specific task. Alternatively, the RS score is only shown if it is less than a certain threshold. It can draw the attention of the operator to images that are assessed to be of non-acceptable quality for the specific task.
- The RS can be shown to the doctor during image interpretation, preferably in combination with the results from the model T$_i$. This would allow the doctors to have an indication of the reliability of the model T$_i$ which can make and automated MSK measurement / classification, for example.

Fig. 2 shows the computer-implemented method 20 for providing a trained second function, comprising:

- Receiving 23 first input training data, wherein the first input training data comprises a first X-ray image (I$_{sim,ref}$) with a high contrast-to-noise-ratio and a well-positioned region of interest;
- Receiving 24 second input training data, wherein the second input training data comprises a second X-ray image (I$_{sim}$) with a different contrast-to-noise-ratio compared to the first X-ray image and/or a differently positioned region of interest compared to the first X-ray image,
- Receiving 26, 27 output training data, wherein the output training data is related to the first input training data and the second input training data, wherein the first X-ray image is processed by a first function and a first model output (O$_{sim,ref}$) is generated, wherein the second X-ray image is processed by the first function and a second model output (O$_{sim}$) is generated, and wherein a reliability score (RS) as output training data is determined based on the first model output and the second model output,
- Training the second function based on the second input training data and the output training data,
- Providing the trained second function.

The training phase for model R$_i$ is a core part of the invention. FIG 2 shows an overview about the training phase of model R$_i$ which can be also called the trained second function.

The following components are required:

1. An untrained model R$_i$. This model takes as input an image and makes a binary classification (probability (=RS) that the image will lead to an acceptable result if processed with model T$_i$)

2. A fully trained model T$_i$. The exact training of the model T$_i$ is not part of this invention. It is assumed that this trained model exists and provides acceptable results on well-acquired images (a well-acquired image has high image quality and good patient positioning).

3. A set 21 of CT volumes of the body part under consideration for the MSK measurement / classification (e. g. 1000 CT volumes)

4. An X-ray image simulation pipeline 22 that can simulate realistically looking X-ray images (in for presentation mode) from a CT volume. This pipeline 22 is denoted as DRR (digitally reconstructed radiograph) pipeline. The DRR pipeline 22 takes as input the CT volume and X-ray acquisition parameters (contrast-to-noise ratio (CNR), relative orientation of the body part to the x-ray source and detector). Furthermore, the DRR pipeline 22 could take as input anatomy modification parameters. E. g. the flexion (angle between femur and tibia) could be changed by changing the pixel data accordingly.

This subsection describes how annotated training images for $R_i$ are automatically created.

A pseudo code of this method is shown below:

Foreach CT volume from the CT data pool 21:

Step 1: With the DRR pipeline 22, create a reference x-ray images $I_{sim,ref}$ under optimal conditions (high CNR, optimal patient positioning) in step 23 which can be called a perfect X-ray image;

Step 2: Process $I_{sim,ref}$ with model $T_i$ in step 25, the output 26 is denoted as $O_{sim,ref}$

Step 3: Define $N_{param}$ parameter sets S for different acquisition parameters for non-optimal CNR, non-optimal patient positioning, etc.

Foreach parameter set from S

Step 4: With the DRR pipeline 22, create an X-ray $I_{sim}$ with the given parameter set in step 24;

Step 5: Process $I_{sim}$ with model $T_i$ in step 25, the output 27 is denoted as $O_{sim}$

Step 6: Compute the reliability score (RS) by comparing $O_{sim}$ and $O_{sim,ref}$ in step 29,

Step 7: Store the pair of $I_{sim}$ and RS as a sample for the training process of $R_i$ in step 30.

A feedback loop for providing annotated training images for $R_i$ can be used (path from 24 to 30). When the doctor interprets an acquired image, the doctor can provide feedback if the image has not been acquired in an acceptable way for this particular task. The feedback (the image with an RS label = 0) can be added to the $R_i$ training data pool.

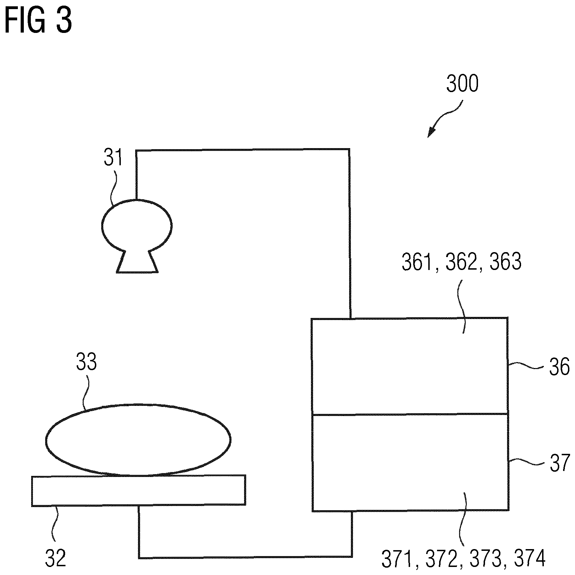

Fig. 3 shows a medical X-ray system 300 according to the invention. The medical X-ray system 300 comprises a providing system 36 and a training system 37.

The providing system 36 comprises a first interface 361, configured for receiving input data, wherein the input data comprises an acquired X-ray image of a region of interest of an object under investigation, a second interface 362, configured for providing output data, wherein the output data comprises the reliability score, a computation unit 363, configured for applying a trained second function to the input data, wherein output data is generated, wherein a first function ($T_i$) is applied to the X-ray image and thereby a measured value corresponding to anatomical characteristics in the region of interest is determined, and a trained second function ($R_i$) is applied to the X-ray image and thereby a reliability score (RS) of the output of the first function is determined, wherein the trained second function is linked to the first function.

The training system 37, comprises a first training interface 371, configured for receiving first input training data and second input training data, wherein the first input training data comprises a first X-ray image ($I_{sim,ref}$) with a high contrast-to-noise-ratio and a well-positioned region of interest, and wherein the second input training data comprises a second X-ray image ($I_{sim}$) with a different contrast-to-noise-ratio compared to the first X-ray image and a differently positioned region of interest compared to the first X-ray image, a second training interface 372, configured for receiving output training data, wherein the output training data is related to the first input training data and the second input training data, wherein the first X-ray image is processed by a first function and a first model output ($O_{sim,ref}$) is generated, wherein the second X-ray image is processed by the first function and a second model output ($O_{sim}$) is generated, and wherein a reliability score (RS) is determined based on the first model output and the second model output, a training computation unit 373, configured for training a second function based on the second input training data and the output training data, and a third training interface 374, configured for providing the trained second function.

The medical X-ray system 300 further comprises an X-ray source 31 and an X-ray detector 32 wherein an object under investigation comprising a region-of-interest is arranged between the X-ray source 31 and the X-ray detector 32.

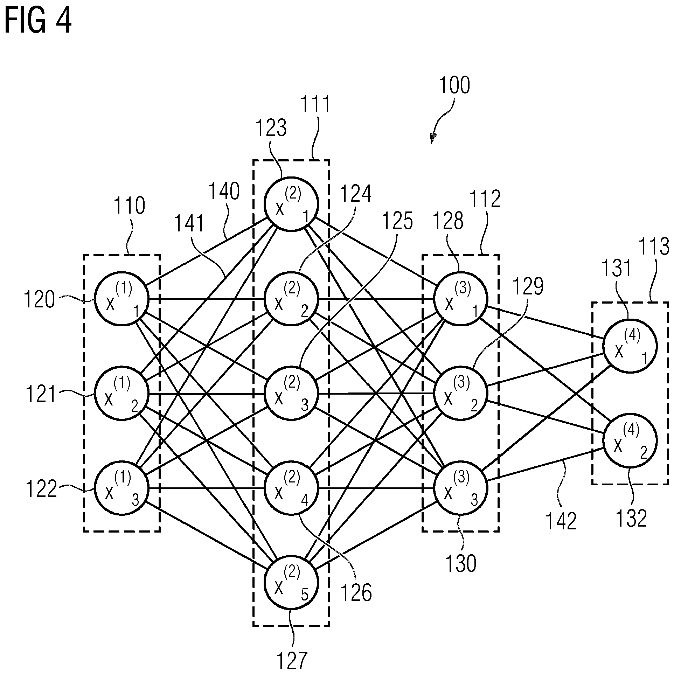

Fig. 4 displays an embodiment of an artificial neural network 100. Alternative terms for "artificial neural network" are "neural network", "artificial neural net" or "neural net".

The artificial neural network 100 comprises nodes 120, ..., 132 and edges 140, ..., 142, wherein each edge 140, ..., 142 is a directed connection from a first node 120, ..., 132 to a second node 120, ..., 132. In general, the first node 120, ..., 132 and the second node 120, ..., 132 are different nodes 120, ..., 132, it is also possible that the first node 120, ..., 132 and the second node 120, ..., 132 are identical. For example, in Fig. 1 the edge 140 is a directed connection from the node 120 to the node 123, and the edge 142 is a directed connection from the node 130 to the node 132. An edge 140, ..., 142 from a first node 120, ..., 132 to a second node 120, ..., 132 is also denoted as "ingoing edge" for the second node 120, ..., 132 and as "outgoing edge" for the first node 120, ..., 132.

In this embodiment, the nodes 120, ..., 132 of the artificial neural network 100 can be arranged in layers 110, ...,

113, wherein the layers can comprise an intrinsic order introduced by the edges 140, ..., 142 between the nodes 120, ..., 132. In particular, edges 140, ..., 142 can exist only between neighboring layers of nodes. In the displayed embodiment, there is an input layer 110 comprising only nodes 120, ..., 122 without an incoming edge, an output layer 113 comprising only nodes 131, 132 without outgoing edges, and hidden layers 111, 112 in-between the input layer 110 and the output layer 113. In general, the number of hidden layers 111, 112 can be chosen arbitrarily. The number of nodes 120, ..., 122 within the input layer 110 usually relates to the number of input values of the neural network, and the number of nodes 131, 132 within the output layer 113 usually relates to the number of output values of the neural network.

In particular, a (real) number can be assigned as a value to every node 120, ..., 132 of the neural network 100. Here, $x^{(n)}_i$ denotes the value of the i-th node 120, ..., 132 of the n-th layer 110, ..., 113. The values of the nodes 120, ..., 122 of the input layer 110 are equivalent to the input values of the neural network 100, the values of the nodes 131, 132 of the output layer 113 are equivalent to the output value of the neural network 100. Furthermore, each edge 140, ..., 142 can comprise a weight being a real number, in particular, the weight is a real number within the interval [-1, 1] or within the interval [0, 1]. Here, $w^{(m,n)}_{i,j}$ denotes the weight of the edge between the i-th node 120, ..., 132 of the m-th layer 110, ..., 113 and the j-th node 120, ..., 132 of the n-th layer 110, ..., 113. Furthermore, the abbreviation $w^{(n)}_{i,j}$ is defined for the weight $w^{(n,n+1)}_{i,j}$.

In particular, to calculate the output values of the neural network 100, the input values are propagated through the neural network. In particular, the values of the nodes 120, ..., 132 of the (n+1)-th layer 110, ..., 113 can be calculated based on the values of the nodes 120, ..., 132 of the n-th layer 110, ..., 113 by

$$x^{(n+1)}_j = f\left(\sum_i x^{(n)}_i \cdot w^{(n)}_{i,j}\right).$$

Herein, the function f is a transfer function (another term is "activation function"). Known transfer functions are step functions, sigmoid function (e.g. the logistic function, the generalized logistic function, the hyperbolic tangent, the Arctangent function, the error function, the smoothstep function) or rectifier functions. The transfer function is mainly used for normalization purposes.

In particular, the values are propagated layer-wise through the neural network, wherein values of the input layer 110 are given by the input of the neural network 100, wherein values of the first hidden layer 111 can be calculated based on the values of the input layer 110 of the neural network, wherein values of the second hidden layer 112 can be calculated based in the values of the first hidden layer 111, etc.

In order to set the values $w^{(mn)}_{i,j}$ for the edges, the neural network 100 has to be trained using training data. In particular, training data comprises training input data and training output data (denoted as $t_i$). For a training step, the neural network 100 is applied to the training input data to generate calculated output data. In particular, the training data and the calculated output data comprise a number of values, said number being equal with the number of nodes of the output layer.

In particular, a comparison between the calculated output data and the training data is used to recursively adapt the weights within the neural network 100 (backpropagation algorithm). In particular, the weights are changed according to

$$w'^{(n)}_{i,j} = w^{(n)}_{i,j} - \gamma \cdot \delta^{(n)}_j \cdot x^{(n)}_i$$

wherein $\gamma$ is a learning rate, and the numbers $\delta^{(n)}_j$ can be recursively calculated as

$$\delta^{(n)}_j = \left(\sum_k \delta^{(n+1)}_k \cdot w^{(n+1)}_{j,k}\right) \cdot f'\left(\sum_i x^{(n)}_i \cdot w^{(n)}_{i,j}\right)$$

based on $\delta^{(n+1)}_j$, if the (n+1)-th layer is not the output layer, and

$$\delta^{(n)}_j = \left(x^{(n+1)}_k - t^{(n+1)}_j\right) \cdot f'\left(\sum_i x^{(n)}_i \cdot w^{(n)}_{i,j}\right)$$

if the (n+1)-th layer is the output layer 113, wherein f' is the first derivative of the activation function, and $y^{(n+1)}_j$ is the comparison training value for the j-th node of the output layer 113.

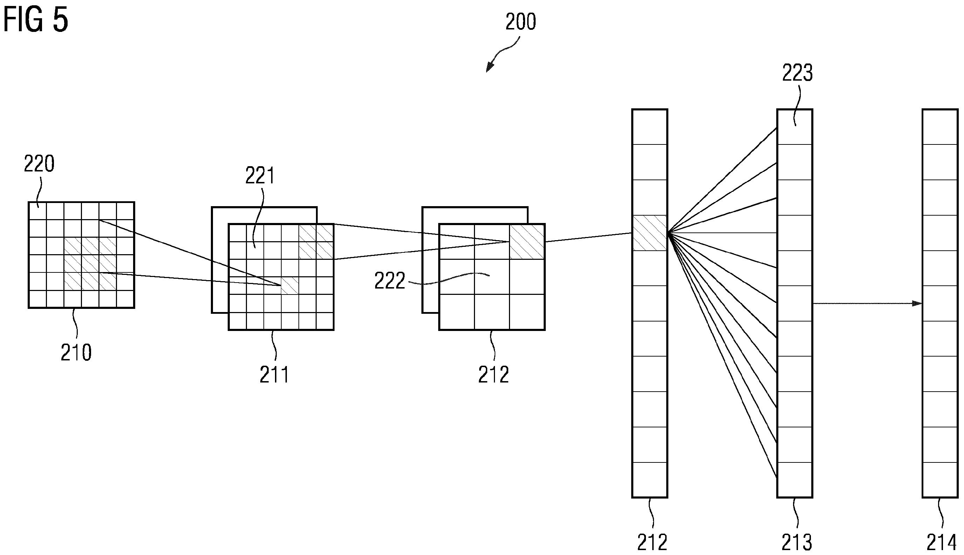

Fig. 5 displays an embodiment of a convolutional neural network 200. In the displayed embodiment, the convolutional neural network comprises 200 an input layer 210, a convolutional layer 211, a pooling layer 212, a fully connected layer 213 and an output layer 214. Alternatively, the convolutional neural network 200 can comprise several convolutional layers 211, several pooling layers 212 and several fully connected layers 213, as well as other types of layers. The order of the layers can be chosen arbitrarily, usually fully connected layers 213 are used as the last layers before the output layer 214.

In particular, within a convolutional neural network 200 the nodes 220, ..., 224 of one layer 210, ..., 214 can be considered to be arranged as a d-dimensional matrix or as a d-dimensional image. In particular, in the two-dimensional case the value of the node 220, ..., 224 indexed with i and j in the n-th layer 210, ..., 214 can be denoted as $x^{(n)}[i,j]$. However, the arrangement of the nodes 220, ..., 224 of one layer 210, ..., 214 does not have an effect on the calculations executed within the convolutional neural network 200 as such, since these are given solely by the structure and the weights of the edges.

In particular, a convolutional layer 211 is characterized by the structure and the weights of the incoming edges forming a convolution operation based on a certain number of kernels. In particular, the structure and the weights of the incoming edges are chosen such that the values $x^{(n)}_k$ of the nodes 221 of the convolutional layer 211 are calculated as a convolution $x^{(n)}_k = K_k * x^{(n-1)}$ based on the values $x^{(n-1)}$ of the nodes 220 of the preceding layer 210, where the convolution * is defined in the two-dimensional case as

$$x^{(n)}_k[i,j] = (K_k * x^{(n-1)})[i,j] = \sum_{i'} \sum_{j'} K_k[i',j'] \cdot x^{(n-1)}[i-i', j-j'].$$

Here the k-th kernel $K_k$ is a d-dimensional matrix (in this embodiment a two-dimensional matrix), which is usually small compared to the number of nodes 220, ..., 224 (e.g. a 3x3 matrix, or a 5x5 matrix). In particular, this implies that the weights of the incoming edges are not independent, but chosen such that they produce said convolution equation. In particular, for a kernel being a 3x3 matrix, there are only 9 independent weights (each entry of the kernel matrix corresponding to one independent weight), irrespectively of the number of nodes 220, ..., 224 in the respective layer 210, ..., 214. In particular, for a convolutional layer 211 the number of nodes 221 in the convolutional layer is equivalent to the number of nodes 220 in the preceding layer 210 multiplied with the number of kernels.

If the nodes 220 of the preceding layer 210 are arranged as a d-dimensional matrix, using a plurality of kernels can be interpreted as adding a further dimension (denoted as "depth" dimension), so that the nodes 221 of the convolutional layer 221 are arranged as a (d+1)-dimensional matrix. If the nodes 220 of the preceding layer 210 are already arranged as a (d+1)-dimensional matrix comprising a depth dimension, using a plurality of kernels can be interpreted as expanding along the depth dimension, so that the nodes 221 of the convolutional layer 221 are arranged also as a (d+1)-dimensional matrix, wherein the size of the (d+1)-dimensional matrix with respect to the depth dimension is by a factor of the number of kernels larger than in the preceding layer 210.

The advantage of using convolutional layers 211 is that spatially local correlation of the input data can exploited by enforcing a local connectivity pattern between nodes of adjacent layers, in particular by each node being connected to only a small region of the nodes of the preceding layer.

In the displayed embodiment, the input layer 210 comprises 36 nodes 220, arranged as a two-dimensional 6x6 matrix. The convolutional layer 211 comprises 72 nodes 221, arranged as two two-dimensional 6x6 matrices, each of the two matrices being the result of a convolution of the values of the input layer with a kernel. Equivalently, the nodes 221 of the convolutional layer 211 can be interpreted as arranges as a three-dimensional 6x6x2 matrix, wherein the last dimension is the depth dimension.

A pooling layer 212 can be characterized by the structure and the weights of the incoming edges and the activation function of its nodes 222 forming a pooling operation based on a nonlinear pooling function f. For example, in the two dimensional case the values $x^{(n)}$ of the nodes 222 of the pooling layer 212 can be calculated based on the values $x^{(n-1)}$ of the nodes 221 of the preceding layer 211 as

$$x^{(n)}[i,j] = f(x^{(n-1)}[id_1, jd_2], ..., x^{(n-1)}[id_1+d_1-1, jd_2+d_2-1])$$

In other words, by using a pooling layer 212 the number of nodes 221, 222 can be reduced, by replacing a number $d_1 \cdot d_2$ of neighboring nodes 221 in the preceding layer 211 with a single node 222 being calculated as a function of the values of said number of neighboring nodes in the pooling layer. In particular, the pooling function f can be the max-function, the average or the L2-Norm. In particular, for a pooling layer 212 the weights of the incoming edges are fixed and are not modified by training.

The advantage of using a pooling layer 212 is that the number of nodes 221, 222 and the number of parameters is reduced. This leads to the amount of computation in the network being reduced and to a control of overfitting.

In the displayed embodiment, the pooling layer 212 is a max-pooling, replacing four neighboring nodes with only one node, the value being the maximum of the values of the four neighboring nodes. The max-pooling is applied to each d-dimensional matrix of the previous layer; in this embodiment, the max-pooling is applied to each of the two two-dimensional matrices, reducing the number of nodes from 72 to 18.

A fully-connected layer 213 can be characterized by the fact that a majority, in particular, all edges between nodes 222 of the previous layer 212 and the nodes 223 of the fully-connected layer 213 are present, and wherein the weight of each of the edges can be adjusted individually.

In this embodiment, the nodes 222 of the preceding layer 212 of the fully-connected layer 213 are displayed both as two-dimensional matrices, and additionally as non-related nodes (indicated as a line of nodes, wherein the number of nodes was reduced for a better presentability). In this embodiment, the number of nodes 223 in the fully connected layer 213 is equal to the number of nodes 222 in the preceding layer 212. Alternatively, the number of nodes 222, 223 can differ.

Furthermore, in this embodiment the values of the nodes 224 of the output layer 214 are determined by applying the Softmax function onto the values of the nodes 223 of the preceding layer 213. By applying the Softmax function, the sum of the values of all nodes 224 of the output layer is 1, and all values of all nodes 224 of the output layer are real numbers between 0 and 1. In particular, if using the convolutional neural network 200 for categorizing input data, the values of the output layer can be interpreted as the probability of the input data falling into one of the different categories.

A convolutional neural network 200 can also comprise a ReLU (acronym for "rectified linear units") layer. In particular, the number of nodes and the structure of the nodes contained in a ReLU layer is equivalent to the number of nodes and the structure of the nodes contained in the preceding layer. In particular, the value of each node in the ReLU layer is calculated by applying a rectifying function to the value of the corresponding node of the preceding layer. Examples for rectifying functions are $f(x) = max(0,x)$, the tangent hyperbolics function or the sigmoid function.

In particular, convolutional neural networks 200 can be trained based on the backpropagation algorithm. For preventing overfitting, methods of regularization can be used, e.g. dropout of nodes 220, ..., 224, stochastic pooling, use of artificial data, weight decay based on the L1 or the L2 norm, or max norm constraints.

**Claims**

1. A computer-implemented method (10) for determining a reliability score for determining a measured value from a medical X-ray image, comprising:

   - Providing (9) an acquired X-ray image of a region of interest of an object under investigation,
   - applying (11) a first function ($T_i$) to the X-ray image and thereby determining (12) anatomical characteristics in the region of interest,
   - applying (13) a trained second function ($R_i$) to the X-ray image and thereby determining (14) a reliability score (RS) of the output of the first function, wherein the trained second function is linked to the first function.

2. Method according to claim 1, wherein the first function comprises a classification function and/or a landmark detection function, and the trained second function comprises a classification function.

3. Method according to one of the preceding claims, wherein the region of interest comprises at least a subregion of the musculoskeletal system and/or a distance based on the anatomical characteristics is determined.

4. A computer-implemented method (20) for providing a trained second function, comprising:

   - Receiving (23) first input training data, wherein the first input training data comprises a first X-ray image with a high contrast-to-noise-ratio and a well-positioned region of interest;
   - Receiving (24) second input training data, wherein the second input training data comprises a second X-ray image with a different contrast-to-noise-ratio compared to the first X-ray image and/or a differently positioned region of interest compared to the first X-ray image,
   - Receiving (26, 27) output training data, wherein the output training data is related to the first input training data and the second input training data, wherein the first X-ray image is processed by a first function and a first model output is generated, wherein the second X-ray image is processed by the first function and a second model output is generated, and wherein a reliability score as output training data is determined based on the first model output and the second model output,
   - Training the second function based on the second input training data and the output training data,
   - Providing the trained second function.

5. Method according to claim 4, wherein the first input training data and the second input training data are generated by a digitally reconstructed radiograph function based on CT volume data.

6. Method according to claim 5, wherein the positioning of the region of interest is determined by a parameter describing the relative orientation of the region of interest to an X-ray source and an X-ray detector and/or an anatomy modification parameter which is used as input to the digitally reconstructed radiograph function.

7. Method according to one of the claims 4 to 6, wherein the reliability score is a binary score.

8. The method according to one of the claims 1 to 3, wherein the trained second function was provided by the method according to one of the claims 4 to 7.

9. A providing system (36), comprising:

   - A first interface (361), configured for receiving input data, wherein the input data comprises an acquired X-ray image of a region of interest of an object under investigation,
   - A second interface (362), configured for providing output data, wherein the output data comprises the reliability score;
   - A computation unit (363), configured for applying a trained second function to the input data, wherein output data is generated, wherein a first function ($T_i$) is applied to the X-ray image and thereby a measured value corresponding to anatomical characteristics in the region of interest is determined, and a trained second function ($R_i$) is applied to the X-ray image and thereby a reliability score (RS) of the output of the first function is determined, wherein the trained second function is linked to the first function.

10. A computer program product comprising instructions which, when the program is executed by a providing system, cause the providing system to carry out the method according to one of the claims 1 to 3.

11. A computer-readable medium comprising instructions which, when executed by a providing system, cause the providing system to carry out the method according to one of the claims 1 to 3.

12. A training system (37), comprising:

   - A first training interface (371), configured for receiving first input training data and second input training data, wherein the first input training data comprises a first X-ray image ($I_{sim,ref}$) with a high contrast-to-noise-ratio and a well-positioned region of interest, and wherein the second input training data comprises a second X-ray image ($I_{sim}$) with a different contrast-to-noise-ratio compared to the first X-ray image and a differently positioned region of interest compared to the first X-ray image,
   - A second training interface (372), configured for receiving output training data, wherein the output training data is related to the first input training data and the second input training data, wherein the first X-ray image is processed by a first function and a first model output ($O_{sim,ref}$) is generated, wherein the second X-ray image is processed by the first function and a second model output ($O_{sim}$) is generated, and wherein a reliability score (RS) is determined based on the first model output and the second model output,
   - A training computation unit (373), configured for training a second function based on the second input training data and the output training data,
   - A third training interface (374), configured for providing the trained second function.

13. A computer program product comprising instructions which, when the program is executed by a training system, cause the training system to carry out the method according to one of the claims 4 to 7.

14. A computer-readable medium comprising instructions which, when executed by a training system, cause the training system to carry out the method according to one of the claims 4 to 7.

15. A medical X-ray (300) system comprising the providing system of claim 9.

FIG 1

FIG 2

FIG 3

300

31

361, 362, 363

36

33

37

32

371, 372, 373, 374

FIG 4

FIG 5

Europäisches
Patentamt

European
Patent Office

Office européen
des brevets

# EUROPEAN SEARCH REPORT

Application Number

EP 23 18 6131

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHAHEER U SAEED ET AL: "Image quality assessment for machine learning tasks using meta-reinforcement learning", ARXIV.ORG, CORNELL UNIVERSITY LIBRARY, 201 OLIN LIBRARY CORNELL UNIVERSITY ITHACA, NY 14853, 27 March 2022 (2022-03-27), XP091185266, DOI: 10.1016/J.MEDIA.2022.102427 * abstract * * Section 1. * * Section 2. * * Sections 3.1, 3.3 * * figures 4,5 * | 1-15 | INV. G06T7/00 |

TECHNICAL FIELDS
SEARCHED     (IPC)

G06T

The present search report has been drawn up for all claims

| Place of search | Date of completion of the search | Examiner |
|---|---|---|
| Munich | 21 December 2023 | Salvador, Elena |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 ................................................................
& : member of the same patent family, corresponding
   document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3566651 A1